# EUROPÄISCHE PATENTANMELDUNG

(11) **EP 0 575 770 A2**
(43) Veröffentlichungstag der Anmeldung: **29.12.1993**
(21) Anmeldenummer: 93108544.3
(22) Anmeldetag: 27.05.1993
(51) Int. Cl.: H04N 9/64

(54) **Verfahren und Anordnung zur Wandlung von digitalen Videosignalen**

(30) Priorität: 20.06.1992 DE 4220235
(71) Anmelder: ROBERT BOSCH GMBH, 70442 Stuttgart (DE)
(72) Erfinder: Neutel, Andreas, Dipl.-Ing. (FH), W-3200 Hildesheim (DE)

(57) **Zusammenfassung**

Bei einem Verfahren zur Wandlung von digitalen Videosignalen, die seriell mehrere Farbkomponenten eines aufgenommenen Bildes enthalten, in parallele digitale Komponentensignale werden die Videosignale derart in Bildspeicher geschrieben und aus diesen gelesen, daß die Komponentensignale mit einer möglichst niedrigen Taktfrequenz weiter verarbeitet werden können und/oder daß Speicherbausteine verwendet werden können, die nicht für extrem hohe Taktfrequenzen ausgelegt sein müssen. Außerdem ermöglicht das erfindungsgemäße Verfahren eine Heraufsetzung der Bildwiederholfrequenz zum Zwecke der Wiedergabe mit einer Bildröhre.

## Beschreibung

Die Aufnahme von unbewegten oder nur langsam bewegten Bildern ist nach farbseriellen Verfahren möglich, wobei in den Strahlengang einer Videokamera, beispielsweise ein Farbfilterrad, angeordnet ist, so daß Videosignale erzeugt werden, die nacheinander die Farbkomponenten des aufgenommenen Bildes beinhalten, beispielsweise die Farbkomponenten Rot, Grün, Blau (R, G, B).

Zur weiteren Verarbeitung der farbseriellen Videosignale ist im allgemeinen eine Wandlung in parallele Komponentensignale erforderlich. Zu dieser Wandlung ist eine Zwischenspeicherung der den Farbauszügen entsprechenden Videosignale erforderlich. Soll hierfür ein Speicher mit der Kapazität nur eines Bildes verwendet werden, so steht zum parallelen Lesen der drei Komponentensignale nur ein kleiner Teil der gesamten Bildperiode zur Verfügung, nämlich vom Ende des zuletzt geschriebenen Farbauszuges eines Bildes bis zum Beginn des Schreibens des zuerst in den Speicher einzuschreibenden Farbauszuges des folgenden Bildes. Wegen dieser kurzen Zeit ist zum Lesen eine hohe Taktfrequenz erforderlich, die bei nachfolgenden Verarbeitungsschritten, wie beispielsweise einer Gradationsentzerrung oder einer Matrizierung, nachteilig ist.

Aufgabe der Erfindung ist es, ein Verfahren zur Wandlung von digitalen Videosignalen, die seriell mehrere Farbkomponenten enthalten, in parallele digitale Komponentensignale anzugeben, das bei einem möglichst geringen Aufwand digitalen Speichern ein weitgehend langsames Lesen der Komponentensignale erlaubt.

Das erfindungsgemäße Verfahren mit den kennzeichnenden Merkmalen des Patentanspruchs 1 hat den Vorteil, daß bei Verwendung eines Bildspeichers mit der Kapazität von lediglich einem Bild der Lesevorgang jeweils eines Bildes auf einen relativ großen Zeitraum ausgedehnt werden kann. Dieser Zeitraum kann bis zu etwa Zweidrittel der Bildperiode der zugeführten digitalen Videosignale mit seriellen Farbkomponenten betragen.

Dieser Vorteil besteht in besonderem Maße bei Verwendung eines Speichers mit einer völligen Unabhängigkeit zwischen den Schreib- und Lesevorgängen. Durch Weiterbildungen des erfindungsgemäßen Verfahrens sowie durch vorteilhafte Anordnungen zur Durchführung des erfindungsgemäßen Verfahrens wird ein relativ großer Zeitraum zum Lesen auch bei einem Speicher erreicht, bei dem die Unabhängigkeit zwischen Lese- und Schreibvorgängen eingeschränkt ist.

Zur weiteren Herabsetzung der Taktfrequenz dient ein Verfahren mit den kennzeichnenden Merkmalen des Patentanspruchs 5, welches vorzugsweise die Benutzung von relativ langsamen, preiswerten Bauelementen für einen Bildspeicher erlaubt, um ein Signal zur Ansteuerung einer Kathodenstrahlröhre zu erzeugen.

Farbvideokameras mit einer seriellen Erzeugung der Komponentensignale werden häufig zur Aufnahme von Stehbildern mit hoher Auflösung verwendet. Dabei kann die hohe Auflösung durch eine Mikroverschiebung erzielt werden, wobei von Bildperiode zu Bildperiode die Abbildung auf dem Sensor um Bruchteile des Bildelementenabstandes verschoben wird. Insbesondere bei diesen Kameras ergibt sich eine niedrige Bildwiederholfrequenz, so daß eine direkte Wiedergabe mit Hilfe einer Bildröhre oder einer anderen Wiedergabeeinrichtung nicht ohne weiteres möglich ist. Das Verfahren nach Patentanspruch 8 löst dieses Problem in vorteilhafter Weise.

Durch die in den Unteransprüchen aufgeführten Maßnahmen sind vorteilhafte Weiterbildungen und Verbesserungen der im Hauptanspruch angegebenen Erfindung möglich.

Ausführungsbeispiele der Erfindung sind in der Zeichnung anhand mehrerer Figuren dargestellt und in der nachfolgenden Beschreibung näher erläutert. Es zeigt:
- Fig. 1: ein Blockschaltbild eines Ausführungsbeispiels,
- Fig. 2: ein Blockschaltbild eines Teils des Ausführungsbeispiels nach Fig. 1 zur Erzeugung paralleler Komponentensignale,
- Fig. 3 und Fig. 4: je eine grafische Darstellung der Schreib- und Lesevorgänge eines in dem Ausführungsbeispiel nach Fig. 2 verwendeten Teilspeichers und
- Fig. 5: ein Blockschaltbild eines weiteren Teils des Ausführungsbeispiels nach Fig. 1.

Gleiche Teile sind in den Figuren mit gleichen Bezugszeichen versehen.

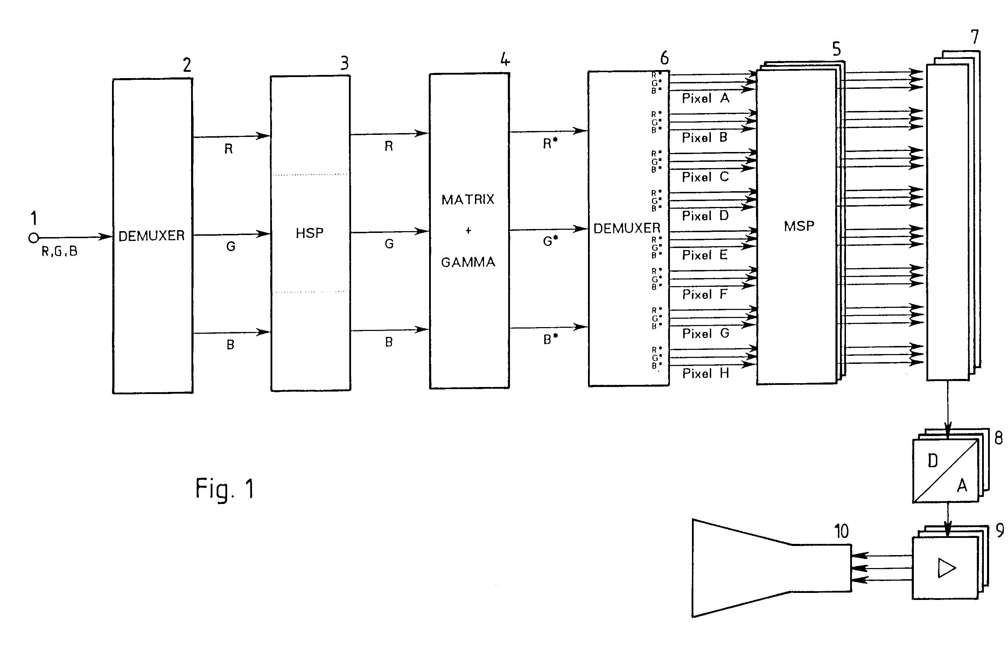

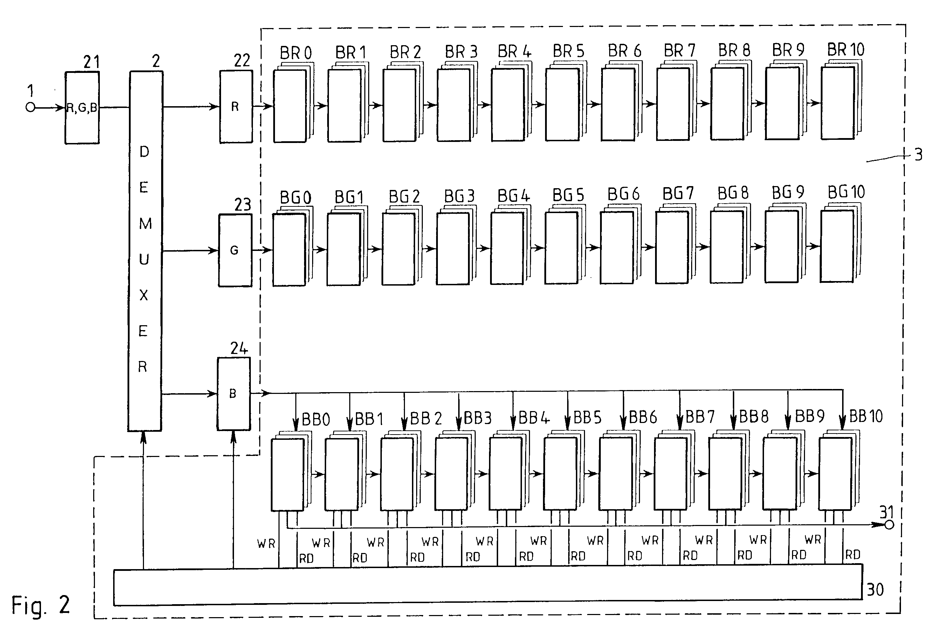

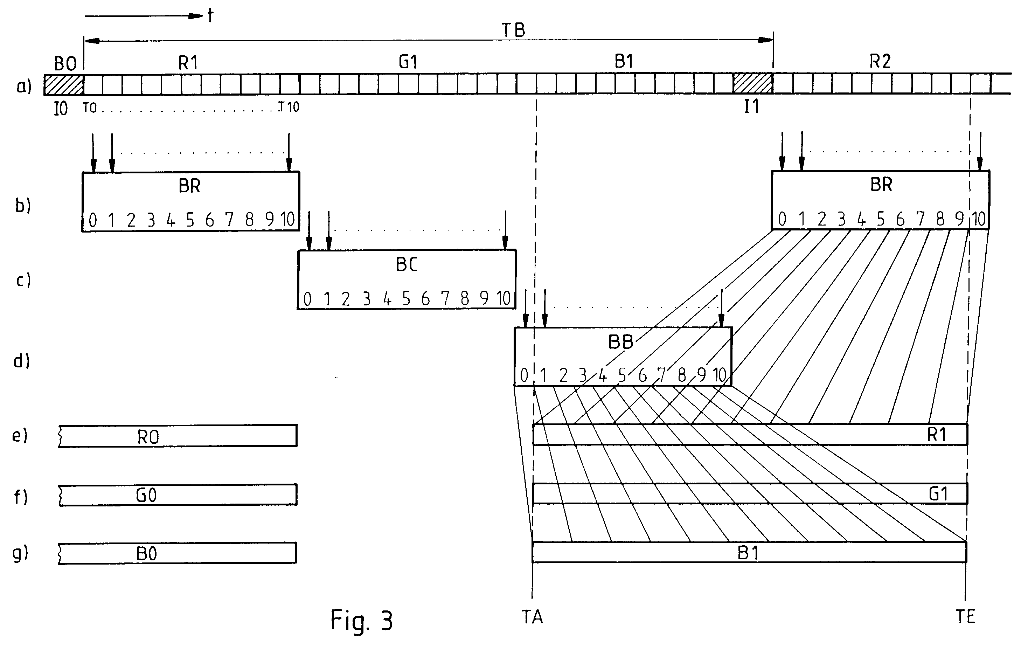

Dem in Fig. 1 dargestellten Ausführungsbeispiel wird über einen Eingang 1 ein Videosignal zugeführt, das in serieller Form drei Farbauszüge R, G, B enthält. Ein derartiges Signal wird beispielsweise von einer Kamera mit einem Filterrad erzeugt, die in Bosch Technische Berichte 8 (1986/1987/1989) 6, Seiten 321 bis 331 beschrieben ist. Ein solches Signal ist schematisch in Zeile a der Fig. 3 dargestellt. Ein Demultiplexer 2 teilt die Signale R, G, B auf drei verschiedene Leitungen auf und führt sie drei Teilen BR, BG und BB (Fig. 3) eines Hauptspeichers 3 zu. Die verteilten Signale sind in den Zeilen b, c und d der Fig. 3 dargestellt. Einzelheiten des Hauptspeichers 3 werden später im Zusammenhang mit Fig. 2 näher erläutert. Das Lesen der Signale R, G, B aus dem Hauptspeicher erfolgt parallel entsprechend den Zeilen e, f, g in Fig. 3. Die parallel gelesenen Signale werden im folgenden Komponentensignale genannt.

Eine Signalverarbeitungsschaltung 4 verarbeitet die Komponentensignale R, G, B, wobei eine Matrizierung sowie eine Gradationsentzerrung (Gamma) erfolgt. In an sich bekannter Weise besteht die Matrizierung darin, daß den Komponentensignale lineare Anteile der anderen Komponentensignale hinzugefügt werden. Die Gradationsentzerrung erfolgt mit einer nichtlinearen Kennlinie, wobei im allgemeinen der den dunklen Bildanteilen zugeordnete Amplitudenbereich gedehnt wird. An Ausgängen der Signalverarbeitungsschaltung 4 stehen die matrizierten und gradationsentzerrten Komponentensignale R*, G* und B* zur Verfügung.

Bei einer Quantisierung eines Videosignals, also auch eines Komponentensignals, mit 256 Graustufen sind Quantisierungsfehler praktisch nicht mehr erkennbar. Eine 8-Bit-Quantisierung von Videosignalen ist daher allgemein gebräuchlich. Bei der Verarbeitung von Videosignalen, insbesondere bei Anwendung einer nichtlinearen Kennlinie, wie in der Schaltung 4, werden entsprechend der Dehnung des Amplitudenbereichs auch Quantisierungsfehler verstärkt. Deshalb werden Videosignale, die noch einer derartigen Arbeit unterzogen werden sollen, häufig feiner quantisiert.

Bei dem Ausführungsbeispiel nach Fig. 1 werden deshalb bei 1 die Videosignale mit einer Breite von 10 Bit zugeführt.

Die zeitliche Lage der Komponentensignale R*, G* und B* gegenüber den Komponentensignalen R, G, B hat sich durch die Verarbeitung in der Schaltung 4 nicht verändert. Die parallelen Komponentensignale nehmen dabei nur weniger als 2/3 der gesamten Bildperiode TB ein.

Ein wesentliches Anwendungsgebiet des erfindungsgemäßen Verfahrens sind hochauflösende Videokameras, bei denen außer einer seriellen Erzeugung der Komponentensignale auch eine serielle Verschiebung des Bildes auf der lichtempfindlichen Fläche eines Halbleitersensors zur Erhöhung der Auflösung erfolgt. Durch diese Maßnahmen ist eine recht große Bildperiode TB erforderlich, von beispielsweise 330ms. Soll das aufgenommene Bild auf dem Schirm einer Kathodenstrahlröhre dargestellt werden, so ist, um Flimmern zu verhindern, eine häufigere Darstellung erforderlich. Hierfür ist bei dem Ausführungsbeispiel nach Fig. 1 ein weiterer Bildspeicher 5 vorgesehen, der im folgenden Monitor-Bildspeicher genannt wird.

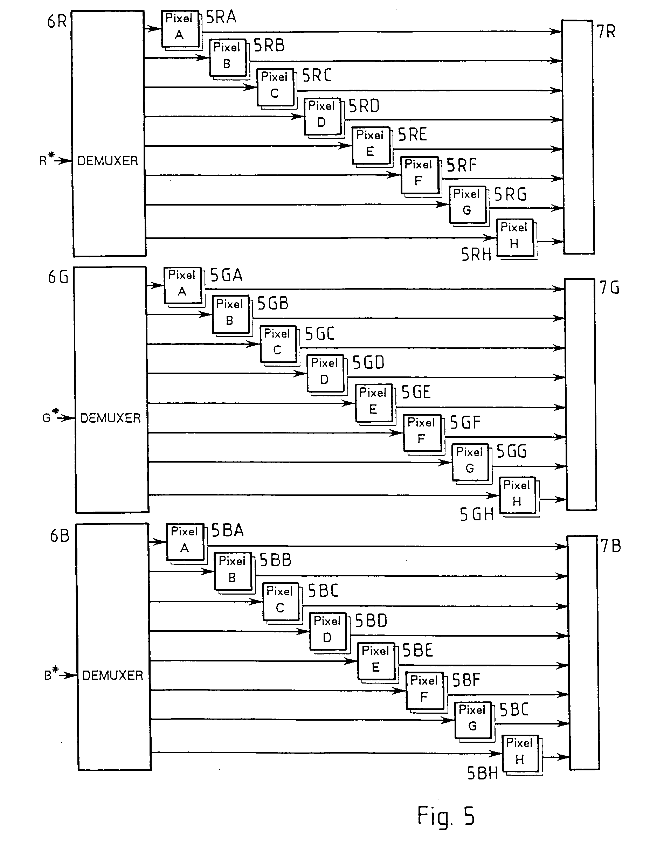

Zur weiteren Verminderung der Schreib- und Lesegeschwindigkeiten im Monitor-Bildspeicher 5 gegenüber dem Takt der Komponentensignale werden diese mit Hilfe eines weiteren Demultiplexers 6 bildelementweise auf acht verschiedene Teilbereiche des Monitor-Bildspeichers 5 verteilt, was in Fig. 1 durch die Beschriftung mit Pixel A bis Pixel H verdeutlicht ist. Einzelheiten des Monitor-Bildspeichers werden später im Zusammenhang mit Fig. 5 erläutert. Ausgänge des Monitor-Bildspeichers 5 sind mit Schieberegistern 7 verbunden, die jeweils mit acht Bildelementen (Pixel A bis Pixel H) geladen werden und deren Ausgänge mit je einem Digital/Analog-Wandler 8 verbunden sind.

Die Ausgangssignale der Digital/Analog-Wandler 8 werden über Videoverstärker 9 Steuerelektroden einer Kathodenstrahlröhre 10 zugeleitet.

Fig. 2 zeigt den Eingang 1, den Demultiplexer 2 und den Haupt-Bildspeicher 3 des Ausführungsbeispiels nach Fig. 1. Dabei sind dem Demultiplexer 2 ein 10-Bit-Register 21 vor- und drei 10-Bit-Register 22, 23, 24 nachgeschaltet. Wie bereits im Zusammenhang mit Fig. 1 beschrieben, verteilt der Demultiplexer 2 die Videosignale.

An jedes der Register 22, 23, 24 sind elf Teilspeicher BR0 bis BR10, BG0 bis BG10, BB0 bis BB10 angeschlossen, im folgenden Speicherbänke genannt. Jede der Speicherbänke nimmt jeweils von einem Komponentensignal den elften Teil der Zeilen eines Bildes auf. Dabei sind jeweils drei Speicherbausteine mit jeweils einer Breite von vier Bit parallelgeschaltet, damit 10-Bit-Worte gespeichert werden können.

Bei den Speicherbänken BR0 bis BR10 und BG0 bis BG10 ist durch Pfeile lediglich angedeutet, daß die jeweils zu einem Bild gehörenden Komponentensignale R und G in die Speicherbänke geschrieben werden. Im Falle der Speicherbänke BB0 bis BB10 sind der Verlauf des Komponentensignals B und Mittel zum Steuern der Speicherbänke schematisch dargestellt. Mit Hilfe einer Steuerschaltung 30, die übrigens auch den Demultiplexer 2 steuert und das Register 24 taktet, können einzelne Speicherbänke zwischen Lesen und Schreiben umgeschaltet werden.

Die zu speichernden Signale werden vom Ausgang des Registers 24 jedem der Dateneingänge DI der Speicherbänke zugeführt. Von jedem Datenausgang DO der Speicherbänke erfolgt eine Weiterleitung der gelesenen Daten zu einem Ausgang 31. Ferner wird von der Steuerschaltung 30 jeder Speicherbank ein Signal zugeführt, welches Schreiben (WR) oder Lesen (RD) bewirkt. Mittel zur Erzeugung von Adressen sind in Fig. 2 nicht dargestellt. Aus Gründen der Vereinfachung sei angenommen, daß jede Speicherbank einen Adressengenerator hat, der beginnend mit einem Schreibsignal WR oder einem Lesesignal RD eine Anfangsadresse mit jedem zugeführten Taktimpuls inkrementiert, so daß fortlaufend alle Speicherplätze angesprochen werden.

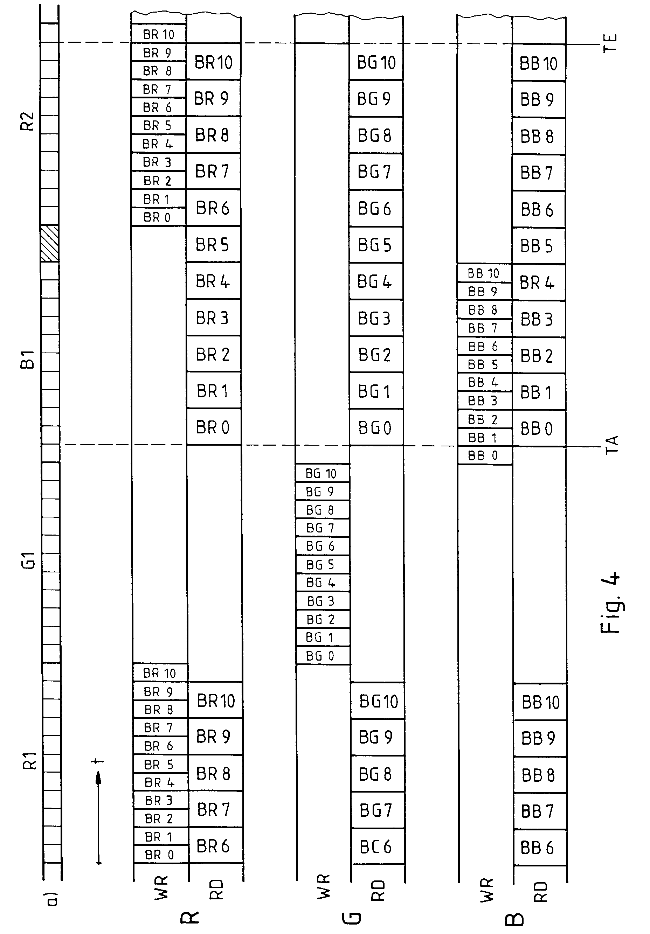

Die Abfolge der Schreib- und Lesevorgänge bei dem Ausführungsbeispiel nach Fig. 2 wird im folgenden anhand der Darstellungen gemäß den Figuren 3 und 4 näher erläutert, wobei Zeile a jeweils das farbserielle Videosignal zeigt. In jeweils einer Bildperiode enthält das Videosignal drei Farbkomponenten R, G, B und ein Austastintervall I. Die Zeilen b, c und d stellen die jeweils für eine Farbkomponente vorgesehenen Bildspeicher BR, BG, BB mit ihren Speicherbänken 0 bis 10 dar. Dabei sind die Bildspeicher unterhalb der jeweils zu speichernden Farbkomponente dargestellt, so daß die Schreibvorgänge durch senkrechte Pfeile angedeutet sind.

Die Rotkomponente R1 des zur Zeit aufgenommenen Bildes wird nacheinander in die Speicherbänke BR0 bis BR10 eingeschrieben. Die entsprechenden Zeiträume sind in Fig. 3 mit T0 ... T10 bezeichnet. In gleicher Weise werden die Grünkomponente G1 und die Blaukomponente B1 in die Speicherbänke BG0 bis BG10, BB0 bis BB10 geschrieben. Sobald die Speicherbank BB0 gefüllt ist (Zeitpunkt TA), wird diese Speicherbank sowie die Speicherbänke BG0 und BB0 auf Lesen umgeschaltet und der für das Lesen vorgesehene Takt an diese Speicherbänke angelegt. Sobald eine der weiteren Speicherbänke gefüllt ist, wird auch diese auf Lesen umgeschaltet usw.. Der Lesevorgang folgt also unmittelbar dem Schreiben der Blaukomponente in den Bildspeicher.

Nach dem Austastintervall I1 des derzeitigen Bildes wird die Rotkomponente R2 des folgenden Bildes in den Bildspeicher geschrieben. Das Lesen der Rotkomponente R1 eilt dem Schreiben der Rotkomponente R2 voraus. Im Falle der Speicherbänke BB0 bis BB10 und BR0 bis BR10 sind die Zusammenhänge zu den parallel gelesenen Signalen R1, G1, B1 durch schräge Linie veranschaulicht. Zum Zeitpunkt TE ist das Lesen der Komponentensignale beendet.

Fig. 4 verdeutlicht die Steuerung der Schreib- und Lesevorgänge der Speicherbänke durch die Steuerschaltung 30. Und zwar ist jeweils für die Farbkomponenten R, G, B als Funktion der Zeit angegeben, welche Speicherbänke (Fig. 2) ein Schreibsignal WR oder ein Lesesignal RD erhalten. Während der Zeiten ohne besondere Angabe wird weder gelesen noch geschrieben.

Fig. 5 zeigt den Demultiplexer 6 und den Monitor-Bildspeicher 5 (Fig. 1) in detaillierterer Darstellung. Für jedes der Komponentensignale R*, G* und B* ist ein Demultiplexer 6R, 6G und 6B vorgesehen, der über jeweils acht Ausgänge verfügt. An jeden Ausgang jedes Demultiplexers 6R, 6G, 6B ist ein Speicher 5RA bis 5RH, 5GA bis 5GH und 5BA bis 5BH angeschlossen. Ausgänge der Speicher sind mit Eingängen der Schieberegister 7, 8, 9 verbunden. Die Speicher 5RA bis 5BA sind für 8-Bit-Datenworte vorgesehen und weisen insgesamt die Kapazität eines Bildes auf. Mit Hilfe einer nicht dargestellten Steuerschaltung werden die Demultiplexer 6R, 6G und 6B derart gesteuert, daß jeweils ein Bildelement in die Speicher 5RA, 5GA und 5BA, danach jeweils ein Bildelement in die Speicher 5RB, 5GB und 5BB usw. eingeschrieben wird. Sind alle Speicher mit je einem Bildelement belegt, wird das jeweils folgende Bildelement unter der folgenden Adresse in die Speicher 5RA, 5GA und 5BA eingeschrieben usw.. Dadurch beträgt die Schreibfrequenz für die Speicher nur ein Achtel der Taktfrequenz der zugeführten Komponentensignale.

Jeweils gleichzeitig (parallel) werden von jedem Komponentensignal acht Bildelemente aus den Speichern ..A bis ..H gelesen und in die Schieberegister 7R, 7G, 7B geschrieben. Aus den Schieberegistern werden dann jeweils acht Bildelemente ausgetaktet, die als zunächst digitales Videosignal dem entsprechenden Digital/Analog-Wandler 8 (Fig. 1) zugeführt werden und als analoge Videosignale die Bildröhre 10 ansteuern. Sind jeweils acht Bildelemente aus dem Schieberegister ausgetaktet, werden schlagartig jeweils acht neue Bildelemente aus den Speichern ..A bis ..H gelesen und in das Schieberegister übertragen.

Die Speicher 5RA bis 5BH können in vorteilhafter Weise durch Speicherbausteiene verwirklicht werden, die ein vom Schreiben unabhängiges Lesen gestatten. Solche Speicher werden auch mit integriertem Adressengenerator hergestellt, so daß lediglich Taktsignale und Anfangsadressen zum Schreiben bzw. Lesen zuzuführen sind. Ein solcher Baustein ist beispielsweise unter der Typenbezeichnung TMS4C1050-3ΦSD der Firma Texas Instruments erhältlich. Bei Verwirklichung der Speicherbänke gemäß Fig. 2 mit diesen Bausteinen kann bereits kurze Zeit nach dem Schreiben der Lesevorgang beginnen. Es muß also nicht erst der Schreibvorgang für eine gesamte Speicherbank vollendet sein, damit mit dem Lesen dieser Speicherbank begonnen werden kann.

## Patentansprüche

1. Verfahren zur Wandlung von digitalen Videosignalen, die seriell mehrere Farbkomponenten eines aufgenommenen Bildes enthalten, in parallele digitale Komponentensignale, dadurch gekennzeichnet,
- daß die Videosignale in einen Bildspeicher geschrieben werden, der mindestens teilweise ein gleichzeitiges Schreiben und Lesen gestattet,
- daß das Lesen der Komponentensignale, die jeweils zu einem Bild gehören, während des Schreibens der Videosignale der zuletzt in den Bildspeicher geschriebenen Farbkomponente dieses Bildes begonnen und während des Schreibens der Videosignale der zuerst in den Bildspeicher geschriebenen Farbkomponente des folgenden Bildes beendet wird.

2. Verfahren nach Anspruch 1, dadurch gekennzeichnet, daß bei einem in mehrere Teilspeicher aufgeteilten Bildspeicher in den einzelnen Teilspeichern unabhängig von den anderen Teilspeichern geschrieben oder gelesen werden kann, daß das Lesen der Komponentensignale eines Bildes beginnt, wenn ein erster Teilspeicher mit Videosignalen der zuletzt in den Bildspeicher geschriebenen Farbkomponente des Bildes beschrieben ist, und daß das Lesen der Komponentensignale beendet wird, bevor ein weiterer Teilspeicher mit Komponentensignalen der zuerst in den Bildspeicher geschriebenen Farbkomponente eines folgendes Bildes beschrieben wird.

3. Anordnung zur Durchführung des Verfahrens nach Anspruch 2, dadurch gekennzeichnet, daß der Bildspeicher von mehreren Teilspeichern gebildet wird, welche jeweils eine Kapazität zur Speicherung der Videosignale mehrerer Fernsehzeilen aufweisen, daß für je eine Farbkomponente eine Gruppe von Teilspeichern vorgesehen ist und daß die digitalen Videosignale über einen Demultiplexer den Gruppen von Teilspeichern zuführbar sind.

4. Anordnung nach Anspruch 3, dadurch gekennzeichnet, daß die Teilspeicher als FIFO-Speicher, jedoch mehrfach auslesbar betrieben werden.

5. Verfahren zur Wandlung von digitalen Videosignalen unter Verwendung eines aus mehreren Teilspeichern bestehenden Bildspeichers, dadurch gekennzeichnet, daß aufeinanderfolgende Signalabschnitte zyklisch in die Teilspeicher geschrieben werden, wobei jeweils ein Signalabschnitt in einen Teilspeicher geschrieben wird, bis alle Teilspeicher mit je einem Signalabschnitt beschrieben sind, und danach weitere Signalabschnitte gleichermaßen in die Teilspeicher geschrieben werden, und daß aus den Teilspeichern je ein Signalabschnitt parallel ausgelesen wird.

6. Verfahren nach Anspruch 5, dadurch gekennzeichnet, daß ein Signalabschnitt einem Bildelement (Pixel) entspricht.

7. Verfahren nach Anspruch 5, dadurch gekennzeichnet, daß die parallel ausgelesenen Signalabschnitte parallel in ein Schieberegister geschrieben werden, aus dem sie als serielles Signal gelesen werden.

8. Verfahren zur Wandlung von digitalen Videosignalen, die seriell mehrere Farbkomponenten eines aufgenommenen Bildes enthalten, in parallele digitale Komponentensignale, dadurch gekennzeichnet,
- daß die Videosignale in einen ersten Bildspeicher geschrieben werden und digitale Komponentensignale parallel aus dem ersten Bildspeicher gelesen werden, wobei die Wiederholfrequenz der digitalen Komponentensignale derjenigen der Videosignale entspricht, und
- daß durch Schreiben in einen zweiten Bildspeicher und wiederholtes Lesen aus dem zweiten Bildspeicher die Bildwiederholfrequenz heraufgesetzt wird.
